# FASCICULE DE BREVET EUROPEEN

(11) **EP 3 186 504 B1**
(45) Date de publication et mention de la délivrance du brevet: **12.12.2018**
(21) Numéro de dépôt: 15757241.3
(22) Date de dépôt: 28.08.2015
(51) Int. Cl.: F03D 3/06

(54) **EOLIENNE A AXE VERTICAL**
WINDTURBINE MIT VERTIKALER ACHSE
VERTICAL AXIS WIND TURBINE

(30) Priorité: 28.08.2014 FR 1458063
(43) Date de publication de la demande: 05.07.2017
(73) Titulaire: Faure, Pierre, 42000 Saint Etienne (FR)
(72) Inventeur: Faure, Pierre, 42000 Saint Etienne (FR)
(74) Mandataire: Brevalex
(86) Numéro de dépôt international: PCT/EP2015/069784
(87) Numéro de publication internationale: WO 2016/030523

(56) Documents cités:
- EP-A1- 2 514 963
- WO-A2-2011/106737
- US-A- 3 930 750

## Description

### DOMAINE TECHNIQUE

L'invention porte sur le domaine des éoliennes, par exemple pour convertir l'énergie cinétique du vent en énergie mécanique, puis éventuellement en énergie électrique.

### ÉTAT DE LA TECHNIQUE ANTÉRIEURE

Les éoliennes sont généralement conçues pour les zones venteuses, c'est-à-dire pour les zones dans lesquelles la vitesse moyenne du vent sur une période donnée dépasse un certain seuil.

Les éoliennes sont généralement inadaptées aux zones peu venteuses et/ou aux zones à vent de vitesse ou de direction inconstantes.

L'invention vise à proposer une éolienne à rendement amélioré pour les zones peu venteuses. Quelques exemples connus dans l'art sont US 3,930,750 et EP 2 514 963.

### EXPOSÉ DE L'INVENTION

Ainsi, l'invention porte sur une pale d'éolienne dont l'une au moins comporte une paroi et des moyens de compartimentage, les moyens de compartimentage délimitant des compartiments de captage dans une chambre intérieure de la paroi, les moyens de compartimentage étant espacés radialement l'un par rapport à l'autre.

Grâce aux moyens de compartimentage, la pale offre un captage du vent amélioré, c'est-à-dire un captage maximum sur une partie importante du parcours de la pale. La pale permet ainsi de capter l'énergie cinétique du vent pour des vitesses de vent très faibles, au moins à partir de 3km/h.

Les moyens de compartimentage permettent de faire fonctionner la pale dans des conditions plus variées que les éoliennes de l'art antérieur, c'est-à-dire dans des zones dans lesquelles le vent est faible ou de vitesse changeante, et de direction changeante.

La pale est de préférence conçue pour une rotation autour d'un axe vertical et/ou pour une éolienne à axe de rotation vertical.

Par conséquent, la pale selon l'invention peut être montée en haut d'un mât de faible hauteur, proche du sol. Elle peut donc être montée à une hauteur de 1,5 m ou 2 m ou 5m, ou plus. Un tel mât court permet par exemple de préserver le paysage.

Dans un mode de réalisation particulier, les moyens de compartimentage sont des cloisons au moins partiellement planes et/ou verticales.

Les moyens de compartimentage peuvent être fixés sur la paroi, sur un châssis de la paroi, sur un support de la paroi et/ou sur une plaque de renfort de la paroi.

La pale peut comporter des moyens pour être montée, par exemple sur un moyeu, de manière télescopique.

Ceci permet avantageusement d'adapter le rayon de la pale à la force du vent.

Les moyens télescopiques peuvent comporter un bras de la pale et des moyens de fixation de ce bras sur le moyeu. Les moyens de fixation peuvent comporter ou être des goupilles.

Ces moyens de fixation sont particulièrement bon marché et simples à mettre en oeuvre.

Avantageusement, la paroi comporte une demi-coque supérieure et une demi-coque inférieure, la surface de la demi-coque supérieure pouvant être supérieure à la surface de la demi-coque inférieure. Alternativement ou cumulativement, un angle entre la demi-coque supérieure et un plan horizontal d'étendue de la pale, mesuré dans la section de la paroi dans un plan de coupe vertical, est supérieur ou égal à un angle compris entre la demi-coque inférieure et le plan horizontal.

Ceci permet avantageusement d'avoir une meilleure résistance au vent sur la partie haute de chaque pale et ainsi de soulager la partie centrale de l'éolienne d'une partie du poids de ses composants.

La demi-coque supérieure et la demi-coque inférieure se rejoignent avantageusement en une arête vive et/ou un bord de jonction présentant un rayon de courbure. Une telle conformation permet une très bonne pénétration dans l'air lorsqu'une pale tourne le dos au vent (les compartiments sont en situation de captage du vent).

Les demi-coques supérieure et inférieure forment préférentiellement un angle compris entre 1° ou 15° ou 25° d'une part et 45° d'autre part, ou encore entre 10° d'une part et 35° d'autre part. Un tel angle donne à la paroi une forme effilée, permettant une très bonne pénétration dans l'air.

Dans un mode de réalisation particulier, la paroi a une section en forme de triangle dans un plan parallèle à un plan comportant un axe Z vertical de l'éolienne et/ou perpendiculairement à un axe d'extension radiale de la pale.

Avantageusement, cette pale est pourvue d'au moins un système, ou de moyens, de contrôle de vitesse monté sur la paroi respective.

Un tel système de contrôle de vitesse permet d'augmenter les déperditions d'énergie cinétique de la pale au-dessus ou à partir d'un seuil donné de vitesse de rotation de l'éolienne et ainsi d'empêcher la détérioration de l'éolienne à haute vitesse.

Le système de contrôle de vitesse peut être monté sur une demi-coque supérieure et/ou sur une demi-coque inférieure que comporte la paroi.

Le système de contrôle de vitesse comporte avantageusement des moyens de contrôle, par exemple un volet, admettant un état déployé dans lequel il s'étend à un angle par rapport à la paroi. Le volet admet un état fermé dans lequel il est aligné avec la paroi et/ou obture au moins partiellement une ouverture ménagée à travers la paroi.

Par exemple, le volet peut être maintenu en position fermée par des ressorts, dont une extrémité est reliée au volet et dont une autre extrémité subit une traction plus ou moins importante, par exemple au moyen d'un poids, disposé dans la pale, et dont la position va évoluer selon la force centrifuge qu'il va subir lors d'un déplacement de la pale.

Avantageusement, la paroi de la pale comporte, par rapport à un axe de rotation, d'une part une portion proximale, ou portion support, d'autre part une portion distale, chacune de ces portions formant chacune un moyen de captage du vent incident.

De préférence, la portion distale a une plus grande hauteur (respectivement : ou épaisseur ou amplitude maximale de sa section d'ouverture pour l'entrée du vent) supérieure à la plus grande hauteur (respectivement : ou épaisseur ou amplitude maximale de la section d'ouverture pour l'entrée du vent) de la portion proximale. La portion proximale peut être de section constante et peut comporter un support, par exemple un bras, reliant la portion distale dans laquelle sont ménagés les moyens de compartimentage au moyeu de l'éolienne.

De préférence encore, la portion distale a un poids supérieur à celui de la portion proximale. Ceci peut être obtenu par un poids plus important des composants utilisés pour la portion distale, ou bien par utilisation d'éléments de lestage dans cette dernière. Il en résulte une plus grande inertie de la pale lors d'à-coup dus à des coups de vent. Une telle conformation permet avantageusement de capter l'énergie cinétique du vent incident à distance importante de l'axe vertical de l'éolienne.

Une pale selon l'invention peut avantageusement comporter au moins une enveloppe, formant un ballon ou poche, destiné à recevoir un gaz et à être disposé en avant des compartiments de captage, dans un espace intérieur à la pale délimité en partie par la paroi.

La paroi d'une pale selon l'invention peut avantageusement comporter une partie ayant une courbure non nulle.

L'invention concerne également une éolienne, comportant au moins une pale, de préférence plusieurs pales, montée(s) sur un moyeu ou arbre. Avantageusement, chaque pale est montée de manière télescopique sur le moyeu. Le moyeu ou l'arbre est destiné à être installé verticalement, les pales pouvant tourner autour de celui-ci dans un plan horizontal.

Une éolienne selon l'invention, ou, plus généralement, une éolienne dont les pales peuvent tourner, dans un plan horizontal, autour d'un axe vertical, peut être entourée d'une barrière de protection périphérique. Celle-ci peut être amovible entre une position de protection, et une position neutre, dans laquelle elle ne réalise pas de protection. Elle peut par exemple comporter des panneaux qui peuvent être abaissés ou descendus, en fonction de la force du vent.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures annexées, schématiques et partielles, dans lesquelles :
- la figure 1 est une section en vue de dessus d'une partie d'une éolienne à axe vertical selon l'invention,
- la figure 2 est un agrandissement d'une section de pale de l'éolienne de la figure 1,
- la figure 3 est une vue en élévation de la pale de la figure 2, face à son volume interne,
- les figures 4 et 5 sont deux vues en coupe d'une paroi de la pale selon les repères IV et V de la figure 3,
- la figure 6 est une vue schématique de dessus montrant plusieurs positions angulaires d'une pale de l'éolienne de la figure 1 par rapport à un sens particulier du vent incident,
- la figure 7 est une vue en perspective d'une pale pourvue d'un système de contrôle optionnel, ici à l'état déployé,
- la figure 8 est une vue en coupe d'une paroi d'une variante de la pale, selon une vue analogue à la coupe de la figure 4,
- les figures 9A-9D sont diverses représentations d'un système de commande d'un volet de contrôle d'une pale d'éolienne selon l'invention,
- les figures 10 - 11 sont des vues en coupe d'une paroi d'une pale selon l'invention et en illustrent d'autres modes de réalisation,
- la figure 12 est une vue en élévation, face à son volume interne, d'une pale selon un autre mode de réalisation de l'invention,
- la figure 13 est une vue en perspective d'une éolienne selon un mode de réalisation de l'invention,
- la figure 14 est une vue d'un système de protection d'une éolienne.

### EXPOSÉ DÉTAILLÉ DE MODES DE RÉALISATION PARTICULIERS

Sur les différentes figures, des références numériques identiques désignent des éléments identiques ou similaires.

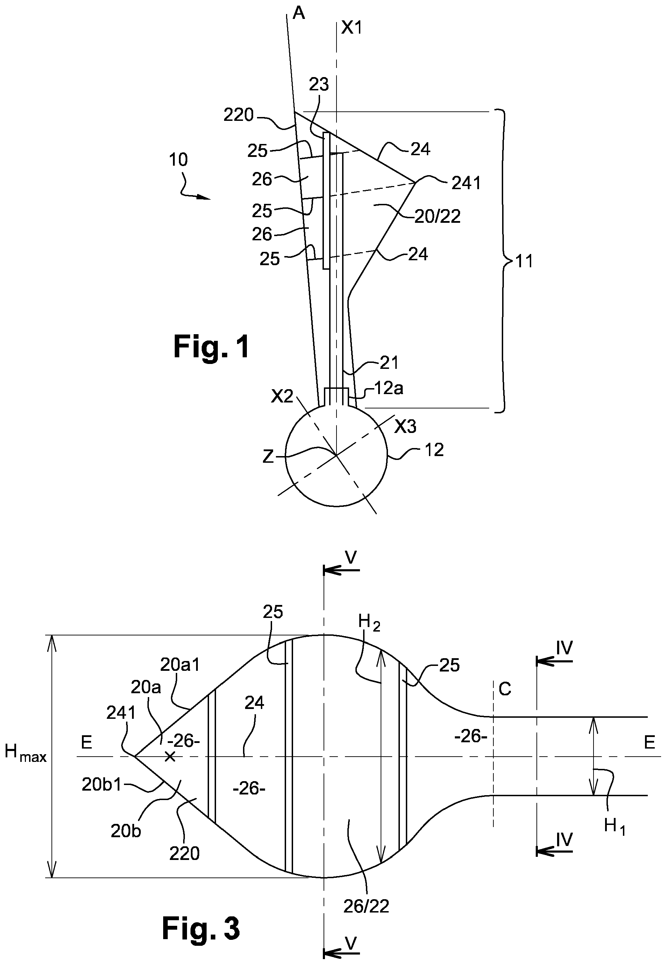

Dans le mode de réalisation illustré en figure 1, l'éolienne 10 à axe vertical comporte un rotor à trois pales 11 et un moyeu, ou arbre, 12. Le moyeu 12 est centré sur un axe vertical Z, transversal au plan de la figure 1. Les trois pales 11 sont fixées sur le moyeu 12. L'éolienne 10 est ici conçue selon une symétrie de rotation suivant un angle de 120°.

Alternativement, le nombre de pales 11 est différent de trois, par exemple deux ou quatre. Il peut aussi être supérieur à 4 ou à 5.

Le moyeu 12 est par exemple monté sur un arbre de générateur d'électricité, ou encore sur un compresseur, non représenté, l'arbre étant d'orientation générale selon l'axe Z.

Chaque pale 11 comporte une paroi 20 et un bras 21 formant support de la paroi 20. Avantageusement, chaque pale 11 peut comporter une plaque 23 de renfort et des cloisons 25.

La plaque 23 permet de former le fond des compartiments 26, pour limiter le volume des chambres, elle peut aussi servir de support pour les parois et/ou le châssis.

Chaque bras 21 comporte par exemple une poutre creuse ou un tube métallique par exemple, mais non limitativement, en inox. Une section du bras 21 peut avoir une forme de carré, de rectangle ou encore selon d'autres formes géométriques ou non. Chaque bras 21 est ici d'orientation, ou d'extension, radiale selon un axe X1, X2 ou X3 respectif, transversal ou perpendiculaire à l'axe Z.

Ci-après, seule la pale 11 dont le bras 21 est orienté selon l'axe X1 sera décrite, sauf indications contraires.

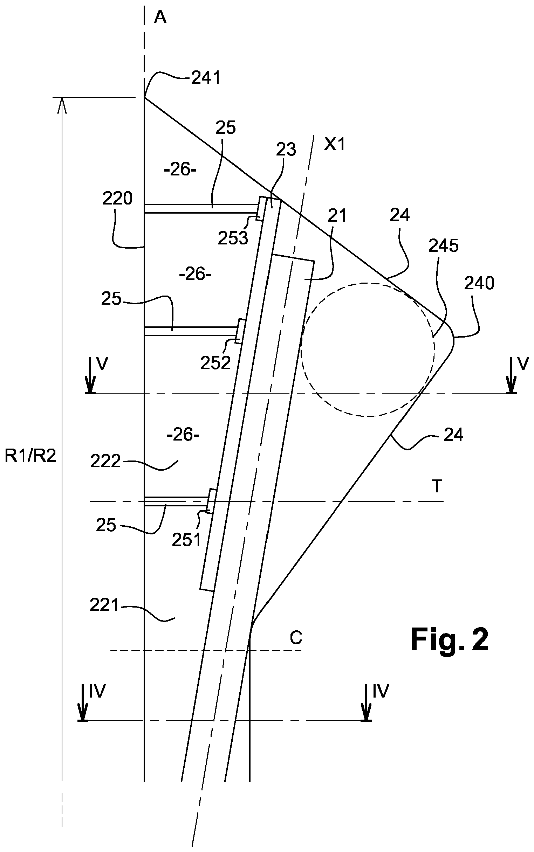

Le bras 21 peut comporter des moyens télescopiques permettant l'extension ou la rétractation radiale des pales 11 et permettant aux pales 11 d'adopter au moins l'une ou l'autre de deux longueurs radiales R1 et R2 (ou toute longueur comprise entre R1 et R2) entre l'axe Z et l'extrémité distale 241 (voir figure 2). Le diamètre de l'éolienne 10 est alors modifiable, par exemple en fonction des conditions environnementales (force du vent, etc.).

Un moyen d'accrochage 12a, qui est lié au moyeu 12 (figure 1) ou au bras peut coopérer, respectivement avec le bras 21 ou avec le moyeu, pour maintenir le bras 21 contre le moyeu 12. Ce moyen d'accrochage 12a est par exemple un manchon, lié au moyeu, et qui permet d'envelopper une extrémité du bras 21. Le bras 21 et le moyen d'accrochage 12a du moyeu 12 sont par exemple pourvus d'orifices non représentés ici. La fixation du bras 21 sur le moyeu 12 peut alors être réalisée au moyen de goupilles insérées chacune dans au moins un orifice de chacun du moyeu 12 et du bras 21.

Alternativement, le bras 21 forme manchon et enveloppe le moyen d'accrochage 12a lui-même. D'autres variantes sont encore possibles.

La plaque 23, par exemple en aluminium, forme ici renfort de la pale 11. La plaque 23 est ici fixée sur le bras 21 et s'étend, dans le mode de réalisation représenté ici, dans un plan vertical parallèle à un plan comportant l'axe Z. Cette orientation de la plaque 23 n'est toutefois pas limitative.

Une réalisation sans plaque 23 est possible. Mais l'ensemble est alors mécaniquement moins robuste. Les parois ou cloisons 25 peuvent être alors prolongées jusqu'à la paroi 20, comme représenté en traits interrompus en figure 1.

La paroi 20 d'une pale 11 peut être en un seul bloc ou en une seule partie. En variante, elle peut être conçue en au moins deux blocs ou au moins deux parties, formées ou fabriquées, au moins en partie, séparément et jointes ensuite. La paroi 20 peut comporter une partie supérieure 20a et une partie inférieure 20b, encore appelées demi-coque supérieure 20a et demi-coque inférieure 20b. Ces deux parties peuvent être formées en seul corps ou, alternativement, les demi-coques 20a et 20b sont formées ou fabriquées séparément et jointes ensuite.

La paroi 20 est par exemple en un matériau composite comportant une matrice en résine de polyester et un renfort en fibres de verre. Ce matériau offre une bonne rigidité pour un poids faible et un coût limité. Alternativement ou cumulativement, la paroi 20 peut comporter d'autres matériaux plastiques ou composites présentant une bonne rigidité et un poids faible.

La paroi 20 et le bras 21, par exemple en acier, de préférence inoxydable, peuvent être maintenus par des tubes tels que les tubes 251, 252, 253 de la figure 2, dont les extrémités sont liées à la paroi 20 et qui peuvent venir en appui contre le bras lorsque la pale subit la poussée du vent (selon une réalisation ces tubes ne sont pas liés au bras 21, seules leurs extrémités sont fixées à la paroi 20). Ces tubes peuvent être en inox ou en bois (de préférence recouvert d'une résine ou d'un revêtement de protection contre l'humidité). Alternativement, la paroi 20 peut comporter un châssis non représenté, par exemple en un métal, tel que l'inox, ou en matière plastique rigide, le châssis étant fixé sur le bras 21 et/ou sur la plaque 23, par exemple par soudage.

La paroi, le bras et les moyens de maintien ou de montage de ces éléments sont assemblés de sorte que la pale soit équilibrée et ne bascule pas, ni vers l'avant ni vers l'arrière.

Selon un autre aspect, la partie distale de la pale peut avoir un poids supérieur à la partie proximale. Ceci permet une plus grande inertie, et une régulation ou un lissage des à-coups qui résultent des coups de vent. Par exemple, ceci peut être obtenu avec un bras 21 qui a une section plus épaisse dans la partie la plus éloignée de l'axe Z que dans la partie la plus proche de celui-ci.

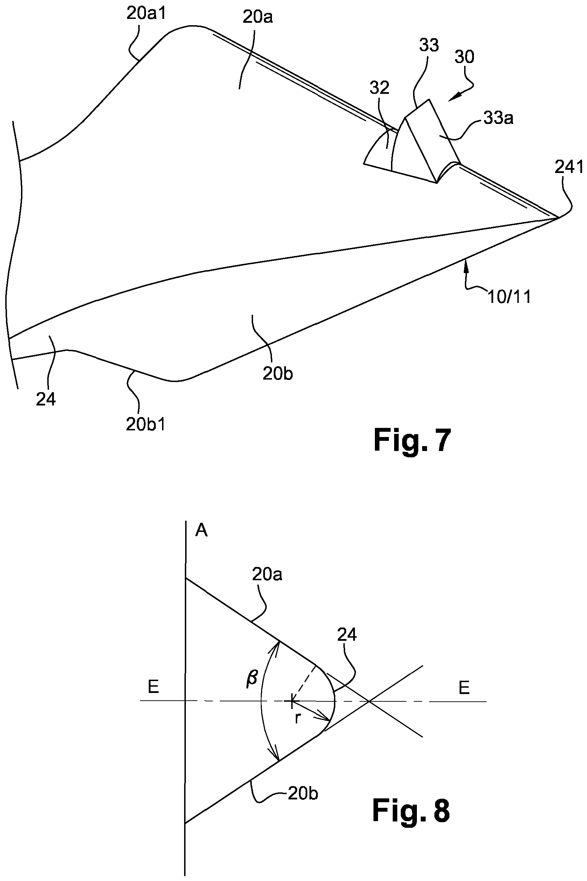

Si la paroi 20 est en 2 parties 20a et 20b, celles-ci comportent un bord respectif 20a1 et 20b1 et sont jointes en un bord de jonction 24 commun (figures 3 et 7). Les bords 20a1 et 20b1 appartiennent ici à un même plan A vertical, parallèle à un plan comportant l'axe Z, dans lequel ils délimitent une embouchure 220 (figure 1) par laquelle le vent va s'introduire dans la pale. En variante non représentée, les bords 20a1 et 20b1 ont une courbure différente et l'embouchure 220 a un pourtour différent d'un pourtour plan et/ou les bords 20a1 et 20b1 sont conformés autrement que dans un plan vertical.

Le bord 24 est une arête vive dans le mode de réalisation représenté en figures 1 à 5. La section de la paroi 20 selon un plan vertical T transversal au plan A est alors en forme de triangle dont les côtés appartiennent aux parties 20a et 20b et au plan A et dont un sommet 240 appartient au bord 24.

Alternativement, le bord de jonction 24 est arrondi, c'est-à-dire que la section de la paroi 20 selon le plan T, les parties 20a et 20b se rejoignent en un bord arrondi 24 (voir figure 8).

L'angle β formé entre les parties 20a et 20b dans un plan vertical parallèle à un plan comportant l'axe Z, peut être compris entre 25° et 45° ou entre 30° et 35° ou 40° ; il est choisi pour assurer une bonne pénétration dans l'air.

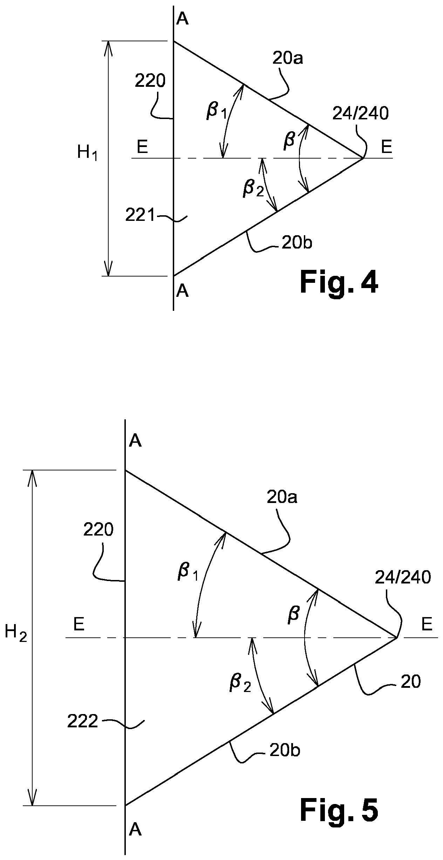

L'angle β peut admettre différentes valeurs le long de la pale, à différentes distances du moyeu 12. Ces valeurs peuvent être comprises dans les gammes indiquées ci-dessus. Ainsi, l'angle β peut par exemple adopter différentes valeurs dans les plans de coupe IV et V (figures 4 et 5), les plans IV et V étant par exemple parallèles à un plan dans lequel s'étend l'axe Z. Ici par exemple les plans de coupe IV et V sont parallèles au plan T qui est lui-même transversal au plan A (voir figure 2). Autrement dit, l'angle β n'est pas nécessairement uniforme le long de la pale.

L'angle β est la somme d'un angle β₁ compris entre la partie supérieure 20a et le plan E horizontal, c'est-à-dire transversal à l'axe Z, et d'un angle β₂ compris entre la partie inférieure 20b et le plan E.

L'angle β₁ peut être supérieur à l'angle β₂ de 0,1° à 1° ou à plusieurs degrés. Alternativement ou cumulativement, la partie 20a a une surface externe d'aire supérieure à une surface externe de la partie 20b. Ceci permet avantageusement à la pale 11 d'être soumise, sous l'effet du vent incident, à une poussée verticale vers le haut, opposée au poids de la pale 11, et de limiter les frottements sur les zones de friction de l'éolienne 10 telles que les paliers (non représentés). Alternativement, les angles β₁ et β₂ sont égaux.

Les parties 20a et 20b délimitent conjointement une chambre interne 22 accueillant, dans le mode de réalisation représenté, le bras 21, la plaque 23, les cloisons 25 et les moyens de liaison entre la paroi 20 et le bras 21. On verra, plus loin, que cette chambre interne peut en outre accueillir un ou plusieurs ballons 245-249. La chambre interne 22 est ouverte par l'embouchure 220, opposée au bord 24.

Les cloisons 25 sont ici disposées transversalement ou perpendiculairement au plan A. Dans le mode de réalisation représenté, les cloisons 25 sont sensiblement verticales et planes, parallèles à l'axe de rotation Z.

Alternativement ou cumulativement, les cloisons 25 s'étendent selon une direction transversale ou perpendiculaire à l'axe X1 de la pale 11.

Plus généralement, les cloisons 25 peuvent être conformées différemment, par exemple comporter au moins une portion plane. Alternativement encore, les cloisons 25 comportent au moins une portion verticale.

Plus généralement encore, les cloisons 25 comportent au moins une portion disposée dans un plan parallèle à un plan comportant l'axe Z.

Une ou des cloisons 25 peut être disposée(s) avec un angle non nul par rapport à la verticale.

Une ou des cloisons 25 peut ne pas être plane ou complètement plane, par exemple elle peut présenter une surface rugueuse.

Les cloisons 25 sont espacées radialement les unes des autres. Dans le mode de réalisation représenté, les cloisons 25 sont fixées sur la plaque 23, par exemple mais non limitativement par soudage ou par des rivets. Les cloisons 25 sont ici au nombre de trois, mais il peut y en avoir plus ou moins de trois, par exemple deux ou quatre.

Les cloisons 25 délimitent avec la paroi 20 des compartiments de captage 26. Les compartiments 26 sont séparés radialement les uns des autres.

Dans le mode de réalisation représenté, les cloisons 25 s'étendent de la plaque 23 à l'embouchure 220 et donc au plan A. En variantes, l'étendue des cloisons 25 est soit moindre, soit plus importante. Par exemple (cas d'extension moindre), les cloisons 25 peuvent s'étendre depuis la plaque 23 sans atteindre l'embouchure 220 ou le plan A, ou encore s'étendre sur une partie seulement de la distance entre la plaque 23 et/ou le bras 21, et l'embouchure 220. Par exemple encore (cas d'extension plus importante), cette étendue est supérieure, voir la réalisation en traits interrompus de la figure 1.

Dans ce mode de réalisation, la paroi 20 comporte deux portions : une portion proximale 221, ou portion support, et une portion distale 222, ici toutes les deux de section triangulaire (voir figures 2, 4 et 5). La portion distale 222 est disposée radialement à l'extérieur de la portion proximale 221, depuis un plan C, sensiblement vertical et transversal au plan A dans le mode de réalisation représenté.

Les deux portions 221 et 222 s'ouvrent sur l'embouchure 220. Ainsi, les deux portions 221 et 222 de la paroi 20, incident et pas seulement la portion distale 222, forment moyens de captage du vent.

La portion 221 s'étend radialement entre le pied de la paroi 20, côté moyeu 12 ou axe Z, et le plan C. La section de la portion 221 est ici triangulaire, avec une base, ou hauteur, de dimension H₁ qui peut être constante sur toute l'étendue radiale de la portion 221. Par exemple, la portion proximale 221 a une plus grande hauteur de dimension H₁ constante.

La section de la portion 222 est ici triangulaire, avec une base, ou hauteur, de dimension H₂ variable. La dimension H₂ s'accroît depuis une valeur égale à H₁ dans le plan C, jusqu'à une hauteur maximale Hₘₐₓ puis rétrécit jusqu'à l'extrémité distale en pointe 241 de la pale 11.

Plus généralement, l'ouverture pour l'entrée du vent de la section ou portion proximale a une hauteur maximale, ou épaisseur maximale, ou amplitude maximale, supérieure à celle de la section ou portion distale.

Cette structure, selon laquelle la hauteur maximale Hₘₐₓ de la portion distale 222 est supérieure à la hauteur H₁ de la portion proximale 221, permet un captage efficace du vent incident. En outre, la zone qui offre le plus de volume de captage du vent, est la zone la plus éloignée du moyeu 12, ce qui est très efficace. Cette structure permet à l'éolienne 10 de démarrer et de fonctionner par des vents très faibles, dès quelques km/h, par exemple dès 2 ou 3 km/h. Ces résultats et considérations s'appliquent également dans le cas où l'une et/ou l'autre des portions 221, 222 a une section autre que triangulaire. C'est le cas, notamment, si les parties 20a et 20b se rejoignent selon un bord arrondi (voir figure 8), auquel cas la section n'est plus exactement triangulaire.

Selon cette réalisation, l'embouchure 220 d'entrée du vent dans la pale a, en s'éloignant de l'axe de rotation, d'abord une section avec une 1^{ère} hauteur (cette section peut avoir une hauteur uniforme), puis une section qui va en s'élargissant, jusqu'à atteindre la hauteur Hmax, puis enfin en se réduisant, pour atteindre l'extrémité 240.

Dans le mode de réalisation représenté, les dimensions H₁ et H₂ sont mesurées dans le plan A dans lequel se trouve l'embouchure 220. Alternativement, lorsque les bords 20a1 et 20b1 ne sont pas disposés dans un plan vertical et/ou lorsque les sections des portions 221 et 222 sont prévues autrement que triangulaires, les dimensions H₁ et H₂ sont les plus grandes hauteurs des sections des portions 221 et 222 selon un ou des plan(s) parallèle(s) à un plan comportant l'axe Z et/ou selon des plans perpendiculaires à l'axe X1 (ou X2, X3). On peut aussi mesurer les hauteurs dans une projection de l'ouverture 220 sur un plan parallèle à Z, auquel cas on mesure des dimensions H'₁ et H'₂ (qui, en projection, peuvent être différentes de H₁ et H₂) telles que H'₂>H'₁.

D'une manière générale, H₁ et H₂ sont les plus grandes hauteurs des sections des portions 221 et 222 selon un ou des plan(s) parallèle(s) à un plan comportant l'axe Z et/ou selon des plans perpendiculaires à l'axe X1 (ou X2, X3).

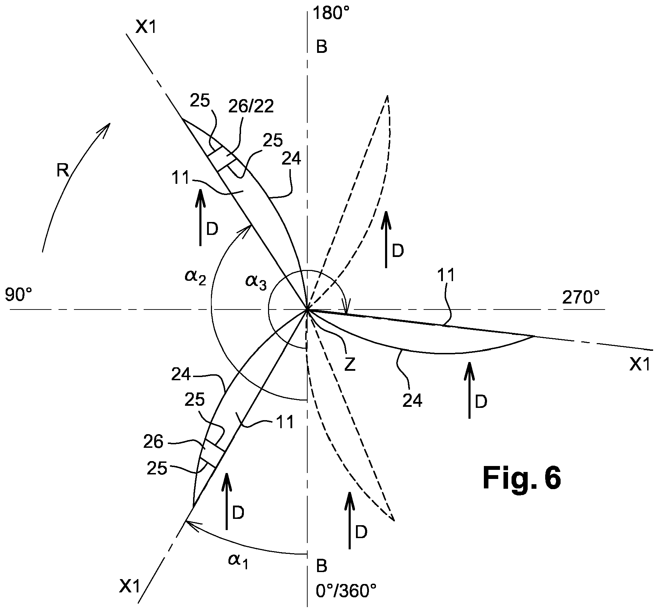

Les avantages des structures décrites ci-dessus sont détaillés ci-après en référence à la figure 6.

Un plan B vertical, auquel appartient l'axe vertical Z, est ici représenté perpendiculaire au plan de la figure 6.

Un sens D du vent incident est défini de haut en bas dans le plan de la figure 6. Le sens D est donc choisi ici parallèle au plan B.

Une référence angulaire de 0°, encore appelé le zéro angulaire, est choisie dans le plan B, en-dessous de l'axe Z, c'est-à-dire ici en bas de la figure 6. Le sens de rotation R de la pale 11 est ici le sens horaire ou anti-trigonométrique, conformément au sens des flèches des angles α₁, α₂ et α₃ décrits ci-après en référence à la figure 6.

Lorsque le vent souffle, l'éolienne 10 est amenée à tourner autour de l'axe Z. Une pale 11 passe par exemple successivement par les positions d'angle α₁, α₂ et α₃. Ici, l'angle α₁ est compris entre 0 et 90°, l'angle α₂ est compris entre 90° et 180° et l'angle α₃ est compris entre 180° et 360°, cette dernière étant une position confondue avec le zéro angulaire.

Lorsque la pale 11 se trouve en une des positions d'angle α₁ ou α₂, c'est-à-dire lorsque l'angle entre le zéro angulaire et le plan A est compris entre 0° et 180° dans le sens horaire, la pale 11 est en zone de captage.

En zone de captage, la pale 11 fait face directement au vent incident par son embouchure 220.

Les cloisons 25 offrent une résistance au vent incident, ou une utilisation de celui-ci, améliorée par rapport à une pale d'éolienne à axe vertical dépourvue de telles cloisons. En effet, les cloisons 25 permettent de retenir le vent incident dans les compartiments 26 en zone de captage, c'est-à-dire sur toute la durée pendant laquelle la chambre 22 fait face au vent, et par conséquent d'améliorer le captage de l'énergie cinétique et sa conversion en énergie mécanique. Le rendement de l'éolienne 10 s'en trouve donc amélioré.

Ainsi, une pale 11 pourvue des cloisons 25 permet de maximiser la capture d'air et donc de l'énergie cinétique du vent incident dans sa zone de captage.

Lorsque la pale 11 se trouve en une position d'angle α₃, c'est-à-dire lorsque l'angle entre le zéro angulaire et le plan A est compris entre 180° et 360° dans le sens horaire, la pale 11 est en zone de pénétration.

En zone de pénétration, l'embouchure 220 ne reçoit pas de vent incident. Autrement dit, en zone de pénétration, le vent incident rencontre le bord 24 avant de longer les parties 20a et 20b.

La configuration du bord 24, selon une arête vive ou un rayon de courbure faible tel que décrit plus haut, et/ou l'angle β choisi entre les parties 20a et 20b, est/sont particulièrement favorable(s) à une bonne pénétration dans l'air sur toute la zone de pénétration, ce qui limite au maximum le ralentissement de la pale 11 lorsqu'elle est en zone de pénétration.

Ainsi, selon que l'embouchure 220 fait face au vent incident, ou pas, la structure de la pale 11 est particulièrement favorable au captage de l'énergie cinétique ou respectivement à la pénétration dans l'air.

Dans une variante avantageuse illustrée en figure 7, la pale 11 comporte un système de contrôle de vitesse 30 permettant de limiter la vitesse de rotation de l'éolienne 10 au-delà d'un seuil prédéterminé. Cette réalisation est notamment adaptée dans le cas où il n'y a pas de plaque 23, comme déjà décrit ci-dessus, les parois ou cloisons 25 pouvant alors être prolongées jusqu'à la paroi 210, comme représenté en traits interrompus en figure 1.

Dans cette variante, des moyens d'échappement d'air 32, ici une ouverture, sont ménagés à travers la partie 20a de la pale 11. Ces moyens permettent de laisser échapper une partie de l'air qui s'introduit dans les caissons 26, ils forment donc une fuite pour cet air, ce qui réduit son efficacité lors de son interaction avec la pale et ralentit cette dernière. Des moyens, ici un volet 33, permettent de fermer ou d'ouvrir cette ouverture. Ces moyens 33 sont montés à l'extérieur de la partie 20a, en regard de l'ouverture 32.

Le nombre d'ouvertures 32 et/ou de volets de contrôle 33 n'est pas limitatif.

Le volet 33 admet un état fermé dans lequel il vient obturer au moins partiellement l'ouverture 32, par exemple dans lequel la surface externe 33a du volet 33 est alignée avec la partie 20a.

Le volet 33 admet en outre un état déployé dans lequel il est disposé en saillie, extérieurement et à un angle par rapport à la partie 20a, par exemple dans une position pivotée par rapport à l'état fermé et compris entre 1° et une position verticale. Dans son état déployé, le volet 33 est éloigné de la partie 20a, de manière à laisser échapper de l'air d'un ou de caissons 26, et éventuellement à offrir une résistance au vent dans la zone de pénétration.

Dans cet état déployé, en effet, des moyens de réglage en inclinaison (non représentés) permettent au volet 33 de changer continuellement de position en fonction de la vitesse de rotation de l'éolienne 10. Les moyens de réglage en inclinaison sont préférentiellement purement mécaniques.

Alternativement, dans son état déployé, le volet 33, ou plus précisément sa surface 33a, est fixe par rapport à la partie 20a. Le volet peut être maintenu en position fermée par des ressorts, dont une extrémité est reliée au volet et une autre extrémité subit une traction plus ou moins importante par un poids, disposé dans la pale, et dont la position va évoluer selon la force centrifuge qu'il va subir lors d'un déplacement de la pale.

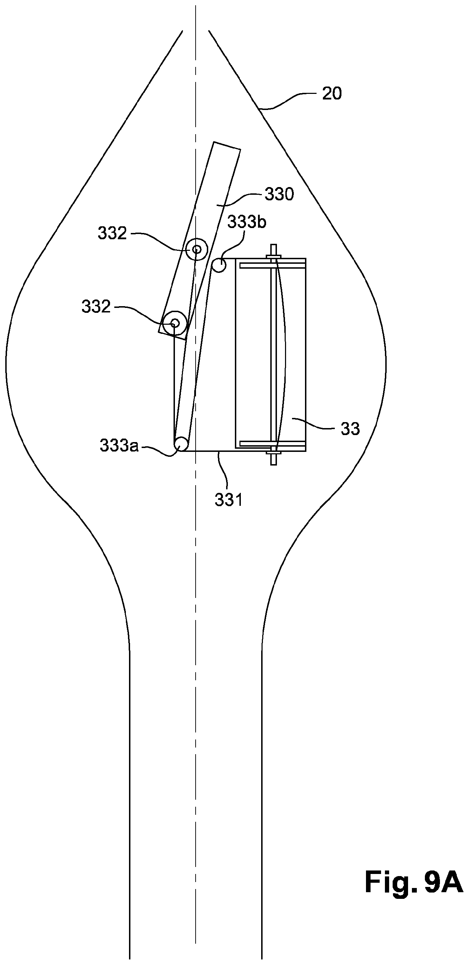

Un exemple de réalisation des moyens de contrôle du volet 33 est illustré en figures 9A - 9D.

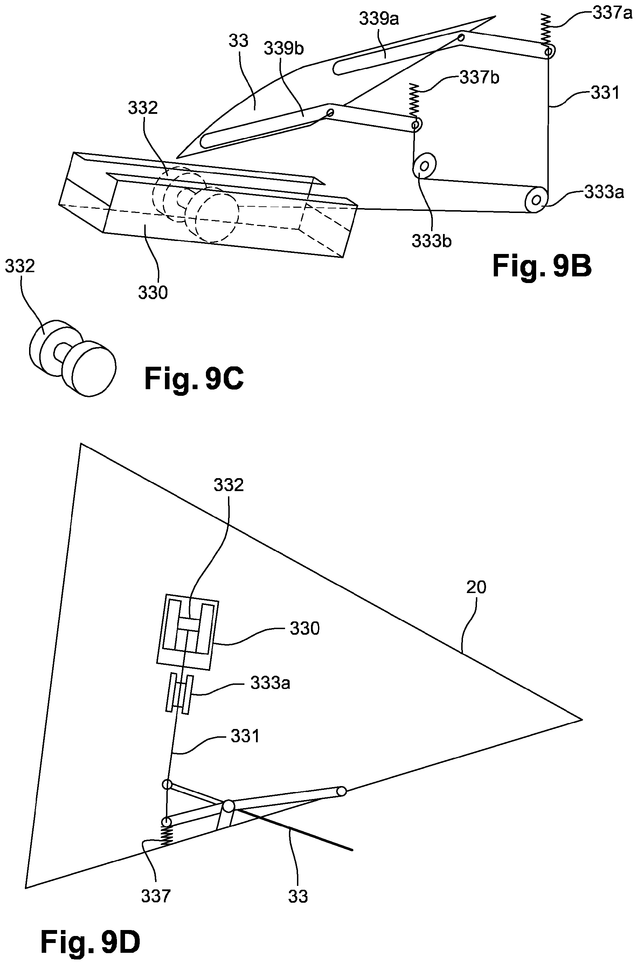

En figure 9A, ces moyens sont représentés dans l'enveloppe constituée par la paroi 20. Ces moyens de contrôle sont représentés en figure 9B, avec le volet 33. La figure 9D représente une vue en coupe de l'enveloppe 20, chacune des références des différentes figures 9A - 9D un même élément.

Ces moyens comportent des moyens 330 formant un plan incliné, sur lequel une masse libre 332 peut se déplacer. La masse exerce une traction sur un fil 331 et, par l'intermédiaire d'un jeu de poulies 333 a, 333b, sur l'extrémité des bras 339a, 339b qui vont actionner l'ouverture ou la fermeture du volet 33. L'extrémité de chacun de ces bras est également reliée à un ressort 337a, 337b.

La position de la masse libre 332 sur le plan incliné va dépendre de la force centrifuge. En fonction de l'intensité de cette dernière, le déplacement de la masse va provoquer une tension plus ou moins importante des ressorts 337a, 337b, faisant ainsi ouvrir, ou fermer, le volet 33 en fonction de la vitesse de rotation.

La figure 9C représente schématiquement une réalisation de la masse libre 332, comportant un moyeu central et des roues d'extrémité, chacune disposée à une extrémité de ce moyeu.

Un tel système de contrôle 30 permet de limiter la vitesse de rotation de l'éolienne 10 une fois une vitesse souhaitée atteinte. Ceci permet avantageusement de limiter l'usure des composants de l'éolienne 10, par exemple des zones de friction telles que les paliers.

Un système de contrôle, par exemple du type du système de contrôle 30 est préférentiellement prévu sur la partie supérieure 20a de chacune des pales 11.

Avantageusement, un système de contrôle similaire ou analogue au système de contrôle 30 est prévu sur la partie inférieure 20b d'au moins une des pales 11, préférentiellement de chacune des pales 11.

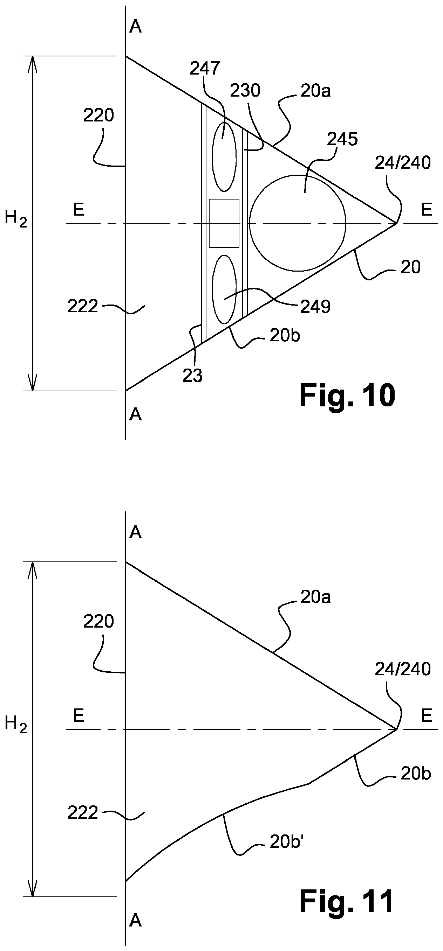

Quel que soit le mode réalisation envisagé, une ou plusieurs poches, remplie(s), ou apte(s) à être remplie(s), de gaz peut être incorporée dans la structure de pale, comme illustré en figure 10, qui représente une vue en coupe d'une pale selon l'invention et sur laquelle on voit une poche ou un ballon 245 disposé en avant du bras 21, entre celui -ci et la face intérieure de la paroi 20. Éventuellement une plaque 230, qui peut être d'extension parallèle à l'axe X1 et qui est parallèle à la plaque 23 peut servir à délimiter le compartiment dans lequel le ballon 245 est contenu.

Un ballon 245 est également représenté en traits interrompus en figure 2, dans le même espace.

Comme illustré en figure 10, un ou des ballon(s) 247, 249 peu(ven)t être prévu(s) de part et d'autre du bras 21, au-dessus et/ou en dessous de celui-ci. Dans ce cas, la plaque 23 (voir aussi figure 1) est disposé en avant du ou des ballon(s) 247, 249 de sorte que leur présence ne gêne pas les compartiments 26 dans leurs fonctions.

Un(e) ou plusieurs poche(s) ou ballon(s) 245, 247, 249, gonflé avec le gaz choisi (par exemple de l'air), permet d'alléger la pale, ou de participer à sa tenue dans l'air.

Le ou les ballon(s) est disposé en avant des compartiments de captage, dans un espace intérieur à la pale délimité en partie par la paroi 20.

Quel que soit le mode réalisation envisagé, la demi-coque inférieure 20a, ou, plus généralement, la partie inférieure de la paroi 20 d'une pale, peut avoir une courbure afin de favoriser la portance de la pale. Ainsi, en figure 11, la partie inférieure de la paroi 20 (ou du volume intérieur délimité par cette paroi) présente une zone 20b' concave (ou en creux, avec un rayon de courbure à l'extérieur). La concavité sera adaptée pour réduire le moins possible le volume des compartiments 26, mais une réalisation avec un ou plusieurs compartiments 26 de volume un peu réduit du fait de la présence d'une telle concavité peut présenter un fort intérêt du fait de cette dernière.

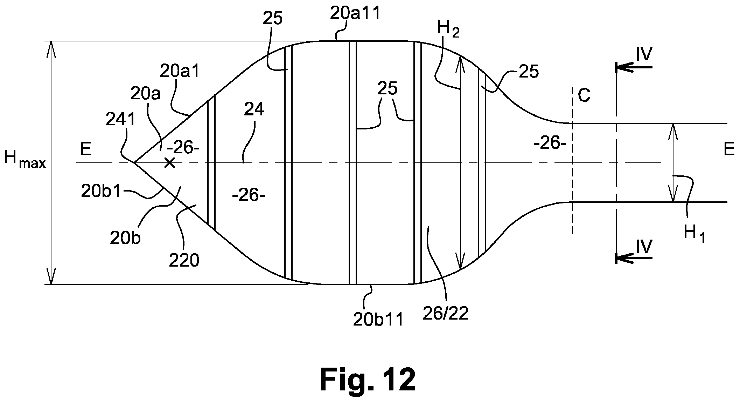

Selon encore un autre aspect, qui peut être combiné avec tout autre mode de réalisation de l'invention, la structure de la figure 3 est présentée avec des bords 20a1 et 20b1 définissant, dans le plan de la figure, une forme s'inscrivant, partiellement, sensiblement ou approximativement sur un cercle, prolongée par une portion qui va en s'effilant jusqu'à l'extrémité distale en pointe 241 de la pale 11. En variante, il est possible, comme illustré en figure 12, de réaliser une structure avec des bords 20a1 et 20b1 définissant, dans le plan de la figure, une forme allongée, pouvant même comporter des portions 20a11 et 20b11 des bords 20a1 et 20b1 en partie sensiblement parallèles entre elles. Cette forme est ensuite prolongée par une portion qui va en s'effilant jusqu'à l'extrémité distale en pointe 241 de la pale 11. Cette structure convient particulièrement bien à la mise en oeuvre d'une ou plusieurs poche(s) ou ballon(s) de gaz, comme expliqué ci-dessus.

D'autres variantes que celles décrites ci-dessus sont envisageables sans sortir du cadre de l'invention. Par exemple, les pales 11 peuvent être orientées à l'opposé par rapport à leur orientation décrite ci-dessus, les pales 11 auront alors un sens de rotation antihoraire, à l'opposé du sens de rotation des pales 11 décrit en référence à la figure 6.

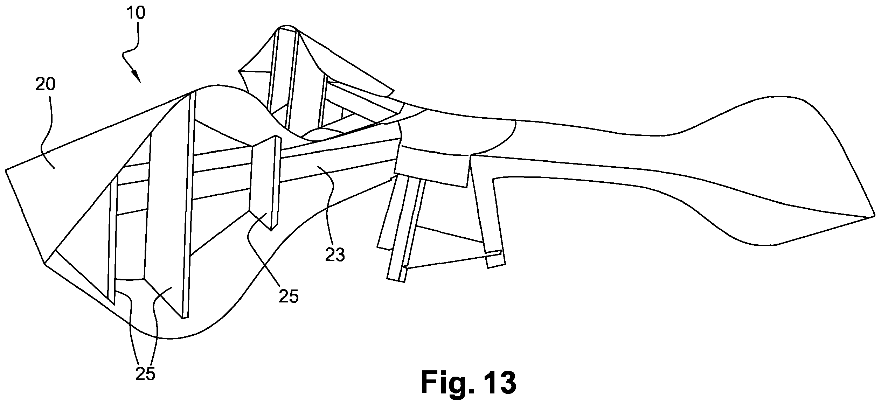

La figure 13 représente une vue en perspective d'une éolienne selon l'invention, comportant 3 pales selon l'invention. On y voit clairement la structure interne d'une pale 10.

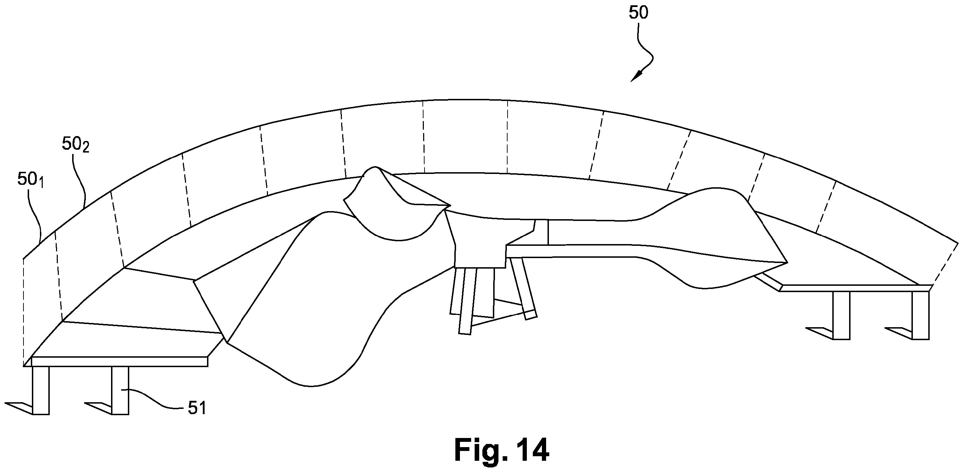

Pour tenir compte des risques, de plus en plus fréquents, de tempête, ou de coup de vent, avec une vitesse supérieure à celle pouvant être compatible avec l'utilisation d'une éolienne, en particulier d'une éolienne selon l'invention, une éolienne, par exemple du type selon l'invention décrite décrite ci-dessus, peut être entourée d'une barrière de protection périphérique, de forme circulaire (cas de la figure 10) ou carrée. Cette barrière peut être mobile entre une position haute, représentée en traits interrompus sur la figure 14 et dans laquelle elle réalise une protection efficace de l'ensemble des pales de l'éolienne contre des rafales de vent excessif, et une position basse, ou neutre, représentée en traits pleins sur la figure 10, dans laquelle aucune barrière ne gêne l'action du vent sur les pales de l'éolienne. Elle peut comporter une succession de panneaux 50₁, 50₂, ...., chacun d'entre eux étant actionné par des moyens correspondants 51₁, qui vont permettre de le redresser en position verticale.

## Revendications

1. Pale d'éolienne (11), pour éolienne à axe vertical, comportant une paroi (20) et des moyens de compartimentage (25), les moyens de compartimentage délimitant des compartiments de captage (26) dans une chambre intérieure (22) de la paroi, les moyens de compartimentage étant espacés radialement l'un par rapport à l'autre, selon un axe (X1, X2, X3), **caractérisé en ce que** la paroi de la pale comporte :
- une portion proximale (221), formant moyens de captage du vent incident,
- et une portion distale (222), formant également moyens de captage du vent incident, de plus grande hauteur Hₘₐₓ supérieure à la plus grande hauteur (H₁) de la portion proximale, ces hauteurs étant mesurées dans un plan perpendiculaire audit axe.

2. Pale selon la revendication précédente, les moyens de compartimentage :
- comportant des cloisons (25) au moins partiellement planes et/ou au moins partiellement verticales ;
- et/ou étant fixés sur la paroi, et/ou sur un châssis de la paroi, et/ou sur un support (21) de la paroi et/ou sur une plaque de renfort (23) de la paroi.

3. Pale selon l'une des revendications précédentes, comportant des moyens de montage télescopiques, par exemple comportant un bras (21) et des moyens (12a) de fixation de ce bras sur un moyeu (12).

4. Pale selon l'une des revendications précédentes, la paroi comportant une demi-coque supérieure (20a) et une demi-coque inférieure (20b), la surface de la demi-coque supérieure étant supérieure à la surface de la demi-coque inférieure.

5. Pale selon la revendication précédente, un angle β1 entre la demi-coque supérieure et un plan horizontal (E) d'étendue de la pale (11), mesuré dans la section de la paroi (20) dans un plan de coupe vertical, étant supérieur ou égal à un angle β2 compris entre la demi-coque inférieure et le plan horizontal (E).

6. Pale selon l'une des revendications 4 et 5, la demi-coque supérieure (20a) et la demi-coque inférieure (20b) se rejoignant en une arête vive (24) et/ou un bord de jonction (24) ayant un rayon de courbure (r) non nul.

7. Pale selon l'une des revendications 4 à 6, la demi-coque supérieure (20a) et la demi-coque inférieure (20b) formant préférentiellement un angle inférieur β compris entre 1° et 45° ou entre 10° d'une part et 35° ou 40° d'autre part.

8. Pale selon l'une des revendications précédentes, la paroi (20) ayant une section sensiblement en forme de triangle dans un plan parallèle à un plan comportant un axe Z vertical de l'éolienne.

9. Pale selon l'une des revendications précédentes, la pale (11) comportant en outre des moyens (30, 32) de contrôle de vitesse.

10. Pale selon la revendication précédente, les moyens (30, 32) de contrôle de vitesse (30) étant monté sur une demi-coque supérieure (20a) et/ou sur une demi-coque inférieure (20b) que comporte la paroi (20).

11. Pale selon l'une des revendications 9 et 10, moyens (30, 32) de contrôle de vitesse comportant au moins un volet (33), et des moyens pour l'amener :
- dans un état déployé dans lequel il s'étend à un angle par rapport à la paroi (20, 20a, 20b),
- et/ou dans un état fermé, dans lequel le volet (33) est aligné avec la paroi (20, 20a, 20b) et/ou obture au moins partiellement une ouverture (32) ménagée à travers la paroi (20, 20a, 20b).

12. Pale selon l'une des revendications précédentes, comportant au moins une enveloppe (245, 247, 249), formant un ballon ou poche, destiné à recevoir un gaz et à être disposé en avant des compartiments de captage, dans un espace intérieur à la pale délimité en partie par la paroi (20).

13. Pale selon l'une des revendications précédentes, une partie (20b') de la paroi (20) ayant une concavité ou une courbure non nulle.

14. Pale selon l'une des revendications précédentes, la portion distale ayant un poids supérieur à celui de la portion proximale.

15. Eolienne comportant au moins une pale selon l'une des revendications précédentes, montée sur un moyeu (12).

## Patentansprüche

1. Windradflügel (11) für ein Windrad mit vertikaler Achse, umfassend eine Wand (20) und Unterteilungsmittel (25), wobei die Unterteilungsmittel Aufnahmeunterteilungen (26) in einer inneren Kammer (22) der Wand begrenzen, wobei die Unterteilungsmittel radial voneinander entlang einer Achse (X1, X2, X3) beabstandet sind, **dadurch gekennzeichnet, dass** die Wand des Flügels umfasst:
- einen proximalen Abschnitt (221), welcher Aufnahmemittel für einfallenden Wind bildet,
- und einen distalen Abschnitt (222), welcher ebenfalls Aufnahmemittel für einfallenden Wind bildet, mit größerer Höhe Hₘₐₓ, welche höher als die größte Höhe (H₁) des proximalen Abschnitts ist, wobei diese Höhen in einer Ebene senkrecht zu der Achse gemessen werden.

2. Flügel nach dem vorhergehenden Anspruch, wobei die Unterteilungsmittel:
- Trennwände (25) umfassen, welche wenigstens teilweise eben und/oder wenigstens teilweise vertikal sind;
- und/oder an der Wand und/oder an einem Rahmen der Wand und/oder an einem Träger (21) der Wand und/oder einer Verstärkungsplatte (23) der Wand befestigt sind.

3. Flügel nach einem der vorhergehenden Ansprüche, umfassend teleskopische Montagemittel, beispielsweise umfassend einen Arm (21) und Mittel (12a) zum fixieren dieses Arms an einer Nabe (12).

4. Flügel nach einem der vorhergehenden Ansprüche, wobei die Wand eine obere Halbschale (20a) und eine untere Halbschale (20b) umfasst, wobei die Oberfläche der oberen Halbschale höher als die Oberfläche der unteren Halbschale ist.

5. Flügel nach dem vorhergehenden Anspruch, wobei ein Winkel β1 zwischen der oberen Halbschale und einer horizontalen Erstreckungsebene (E) des Flügels (11), gemessen im Schnitt der Wand (20) in einer vertikalen Schnittebene, größer oder gleich einem Winkel β2 ist, welcher zwischen der unteren Halbschale und der horizontalen Ebene (E) eingeschlossen ist.

6. Flügel nach einem der Ansprüche 4 und 5, wobei die obere Halbschale (20a) und die untere Halbschale (20b) sich in einer scharfen Kante (24) und/oder einem Verbindungsrand (24) treffen, mit einem Krümmungsradius (r) ungleich null.

7. Flügel nach einem der Ansprüche 4 bis 6, wobei die obere Halbschale (20a) und die untere Halbschale (20b) vorzugsweise einen unteren Winkel β bilden, welcher zwischen 1° und 45° oder zwischen 10° einerseits und 35° oder 40° andererseits beträgt.

8. Flügel nach einem der vorhergehenden Ansprüche, wobei die Wand (20) einen Querschnitt im Wesentlichen in Form eines Dreiecks in einer Ebene parallel zu einer Ebene aufweist, welche eine vertikale Z-Achse des Windrads umfasst.

9. Flügel nach einem der vorhergehenden Ansprüche, wobei der Flügel (11) ferner Mittel (30, 32) zum Steuern/Regeln der Geschwindigkeit umfasst.

10. Flügel nach dem vorhergehenden Anspruch, wobei die Mittel (30, 32) zum Steuern/Regeln der Geschwindigkeit (30) an einer oberen Halbschalte (20a) und/oder an einer unteren Halbschale (20b) montiert sind, welche die Wand (20) umfasst/umfassen.

11. Flügel nach einem der Ansprüche 9 und 10, wobei die Mittel (30, 32) zum Steuern/Regeln der Geschwindigkeit wenigstens eine Klappe (33) umfassen, um sie zu überführen:
- in einen ausgefahrenen Zustand, in welchem sie sich in einem Winkel gegenüber der Wand (20, 20a, 20b) erstreckt,
- und/oder in einen geschlossenen Zustand, in welchem die Klappe (33) mit der Wand (20, 20a, 20b) ausgerichtet ist und/oder eine Öffnung (32) wenigstens teilweise verschließt, welche durch die Wand (20, 20a, 20b) hindurch vorgesehen ist.

12. Flügel nach einem der vorhergehenden Ansprüche, umfassend wenigstens eine Hülle (245, 247, 249), welche einen Ballon oder eine Tasche bildet, dazu vorgesehen, ein Gas aufzunehmen und vor den Aufnahmeunterteilungen in einem inneren Raum in dem Flügel angeordnet zu sein, welcher teilweise durch die Wand (20) begrenzt ist.

13. Flügel nach einem der vorhergehenden Ansprüche, wobei ein Teil (20b') der Wand (20) eine Konkavität oder Krümmung aufweist, welche ungleich null ist.

14. Flügel nach einem der vorhergehenden Ansprüche, wobei der distale Abschnitt ein Gewicht aufweist, welches größer ist als das des proximalen Abschnitts.

15. Windrad, umfassend wenigstens einen Flügel nach einem der vorhergehenden Ansprüche, montiert an einer Nabe (12).

## Claims

1. Wind turbine blade (11) for a vertical axis wind turbine, comprising a wall (20) and partition means (25), wherein the partition means delimit collecting compartments (26) in an inner chamber (22) of the wall, wherein the partition means are spaced radially from one another along an axis (X1, X2, X3), **characterized in that** the wall of the blade comprises:
- a proximal portion (221) forming means to collect the incident wind,
- and a distal portion (222), also forming means to collect the incident wind, and with a height Hₘₐₓ greater than the greatest height (H₁) of the proximal portion, wherein these heights are measured in a plane perpendicular to the axis.

2. Blade according to the preceding claim, wherein the partition means comprise:
- partitions (25) that are at least partially flat and/or at least partially vertical; and/or
- that are fixed on the wall, and/or on a frame of the wall, and/or on a support (21) of the wall and/or on a reinforcing plate (23) of the wall.

3. Blade according to one of the preceding claims, comprising telescopic mounting means, for example that comprise an arm (21) and means (12a) for fixing the arm on a hub (12).

4. Blade according to one of the preceding claims, wherein the wall comprises an upper half-shell (20a) and a lower half-shell (20b), and wherein the surface of the upper half-shell is greater than the surface of the lower half-shell.

5. Blade according to the preceding claim, wherein an angle β1, between the upper half-shell and a horizontal plane (E) of the blade (11) as measured in a vertical plane of the section of the wall (20), is greater than or equal to an angle β2 between the lower half-shell and the horizontal plane (E).

6. Blade according to one of the claims 4 and 5, wherein the upper half-shell (20a) and the lower half-shell (20b) join one another with a sharp edge (24) and/or a joining edge (24) having a non-zero radius of curvature (r) .

7. Blade according to one of the claims 4 to 6, wherein the upper half-shell (20a) and the lower half-shell (20b) preferentially form a lower angle β between 1° and 45° or between 10°, on the one hand, and 35° or 40°, on the other hand.

8. Blade according to one of the preceding claims, wherein the wall (20) has a substantially triangular section in a plane parallel to a plane having a vertical axis Z of the wind turbine.

9. Blade according to one of the preceding claims, wherein the blade (11) further comprises means (30, 32) for speed control.

10. Blade according to the preceding claim, wherein the means (30, 32) for speed control (30) are mounted on an upper half-shell (20a) and/or on a lower half-shell (20b) that comprises the wall (20).

11. Blade according to one of the claims 9 and 10, wherein means (30, 32) for speed control comprise at least one flap (33), and means for bringing it:
- into a deployed state in which it extends at an angle to the wall (20, 20a, 20b),
- and/or into a closed state, in which the flap (33) is aligned with the wall (20, 20a, 20b) and/or at least partially closes an opening (32) formed through the wall (20, 20a, 20b).

12. Blade according to one of the preceding claims, comprising at least one envelope (245, 247, 249) forming a balloon or pocket, to receive a gas, and arranged in front of the collecting compartments, in an interior space of the blade delimited in part by the wall (20).

13. Blade according to one of the preceding claims, wherein a part (20b') of the wall (20) has a non-zero concavity or curvature.

14. Blade according to one of the preceding claims, wherein the distal portion has a weight greater than that of the proximal portion.

15. Wind turbine comprising at least one blade according to one of the preceding claims, and mounted on a hub (12).
